# EUROPÄISCHE PATENTANMELDUNG

(11) **EP 3 614 555 A1**
(43) Veröffentlichungstag der Anmeldung: **26.02.2020**
(21) Anmeldenummer: 18190184.4
(22) Anmeldetag: 22.08.2018
(51) Int. Cl.: H02P 5/74, H02P 29/032

(54) **OPTIMIERTER BETRIEB EINER MASCHINE MIT MEHREREN ANTRIEBEN**

(71) Anmelder: Siemens Aktiengesellschaft, 80333 München (DE)
(72) Erfinder: Bitterolf, David, 91056 Erlangen (DE); Rupprecht, Stefan, 92353 Postbauer-Heng (DE); Wedel, Bernd, 91096 Möhrendorf (DE)

(57) **Zusammenfassung**

Eine Steuereinrichtung (6) einer Maschine überwacht einen Leistungsbezug (P1*), den Antriebe (1a) der Maschine über eine Einspeiseeinrichtung (2) beziehen. Die Steuereinrichtung (6) schaltet von einem Normalbetrieb in einen Sonderbetrieb bzw. vom Sonderbetrieb in den Normalbetrieb um, sobald der Leistungsbezug (P1*) einen oberen Umschaltwert (GO) überschreitet bzw. einen unteren Umschaltwert (GU) unterschreitet. Die Steuereinrichtung (6) ermittelt in beiden Betriebsarten zyklisch für die Antriebe (1a) unter Verwendung von für den jeweiligen Zyklus gültigen Basissollwerten (B1j*) der Antriebe (1a) vorläufige Stromsollwerte (I1j*) derart, dass Betriebszustände der Antriebe (1a) den Basissollwerten (B1j*) so weit wie möglich angenähert werden. Sie steuert die Antriebe (1a) in beiden Betriebsarten entsprechend resultierenden Stromsollwerten (I1j*) an. Im Normalbetrieb stimmen die resultierenden mit den vorläufigen Stromsollwerten (I1j*) überein. Im Sonderbetrieb ermittelt die Steuereinrichtung eine für die Antriebe (1a) in ihrer Gesamtheit verfügbare Gesamtleistung (P1). Weiterhin ermittelt sie unter Auswertung von aktuellen Soll- und/oder Ist-Betriebszuständen der Antriebe (1a) für die Antriebe (1a) dynamisch einen jeweiligen Anteilsfaktor (fj). Schließlich ermittelt sie die resultierenden Stromsollwerte (I1j*) durch Modifikation der vorläufigen Stromsollwerte (I1j*) derart, dass vom jeweiligen Antrieb (1a) nur eine jeweilige Leistung bezogen wird, die sich als Produkt des jeweiligen Anteilsfaktors (fj) und der verfügbaren Gesamtleistung (P1) ergibt.

## Beschreibung

Die vorliegende Erfindung geht aus von einem Betriebsverfahren für eine Maschine, die mehrere erste Antriebe aufweist,
- wobei eine Steuereinrichtung der Maschine einen Leistungsbezug, den die Maschine über eine zumindest die ersten Antriebe mit elektrischer Energie versorgende Einspeiseeinrichtung bezieht, überwacht,
- wobei die Steuereinrichtung die Maschine von einem Normalbetrieb in einen Sonderbetrieb umschaltet, sobald der Leistungsbezug einen oberen Umschaltwert überschreitet, und die Maschine vom Sonderbetrieb in den Normalbetrieb umschaltet, sobald der Leistungsbezug einen unteren Umschaltwert unterschreitet,
- wobei die Steuereinrichtung sowohl im Normalbetrieb als auch im Sonderbetrieb zyklisch für die ersten Antriebe unter Verwendung eines für den jeweiligen Zyklus gültigen ersten Basissollwertes des jeweiligen ersten Antriebs jeweils einen vorläufigen ersten Stromsollwert ermittelt,
- wobei die Steuereinrichtung sowohl im Normalbetrieb als auch im Sonderbetrieb die vorläufigen ersten Stromsollwerte derart ermittelt, dass ein Betriebszustand des jeweiligen ersten Antriebs dem jeweiligen ersten Basissollwert so weit wie möglich angenähert wird,
- wobei die Steuereinrichtung die ersten Antriebe sowohl im Normalbetrieb als auch im Sonderbetrieb entsprechend einem jeweiligen resultierenden ersten Stromsollwert ansteuert,
- wobei im Normalbetrieb die resultierenden ersten Stromsollwerte mit den jeweiligen vorläufigen ersten Stromsollwerten übereinstimmen,
- wobei die Steuereinrichtung im Sonderbetrieb eine für die ersten Antriebe in ihrer Gesamtheit verfügbare Gesamtleistung ermittelt.

Die vorliegende Erfindung geht weiterhin aus von einem Steuerprogramm für eine Steuereinrichtung für eine Maschine, die mehrere erste Antrieb aufweist, wobei das Steuerprogramm Maschinencode aufweist, der von der Steuereinrichtung abarbeitbar ist, wobei die Abarbeitung des Maschinencodes durch die Steuereinrichtung bewirkt, dass die Steuereinrichtung die Maschine gemäß einem derartigen Betriebsverfahren betreibt.

Die vorliegende Erfindung geht weiterhin aus von einer Steuereinrichtung für eine Maschine, die mehrere erste Antrieb aufweist, wobei die Steuereinrichtung mit einem derartigen Steuerprogramm programmiert ist, so dass die Steuereinrichtung die Maschine gemäß einem derartigen Betriebsverfahren betreibt.

Die vorliegende Erfindung geht weiterhin aus von einer Maschine,
- wobei die Maschine mehrere erste Antriebe aufweist,
- wobei die Maschine eine Einspeiseeinrichtung aufweist, über welche zumindest die ersten Antriebe mit elektrischer Energie versorgt werden,
- wobei die Maschine eine derartige Steuereinrichtung aufweist, welche die ersten Antriebe steuert.

Maschinen weisen oftmals mehrere elektrische Antriebe auf, die über eine gemeinsame Einspeiseeinrichtung - beispielsweise einen Gleichrichter mit nachgeordnetem Spannungszwischenkreis - mit elektrischer Energie versorgt werden. Die Einspeiseeinrichtung muss derart dimensioniert und betrieben werden, dass ihre momentane Maximalleistung - d.h. diejenige Leistung welche die Einspeiseeinrichtung den Antrieben zur Verfügung stellen kann - immer größer ist als die Summe der Leistungen ist, welche die Antriebe momentan tatsächlich über die Einspeiseeinrichtung beziehen.

Die von den Antrieben insgesamt geforderte Leistung schwankt während des Betriebs der Maschine oftmals in erheblichem Umfang. Beispielsweise bei einer Werkzeugmaschine ist insbesondere vor und nach einem Werkzeugwechsel die geforderte Leistung sehr groß, da in diesem Fall alle lagegeregelten Achsen gleichzeitig beschleunigen oder bremsen und weiterhin oftmals auch drehzahlgeregelte Spindeln herunter- oder herauffahren. Während der übrigen Bearbeitungszeit ist die insgesamt geforderte Leistung oftmals viel niedriger.

Die Einspeiseeinrichtung muss in der Lage sein, jederzeit alle Antriebe mit der erforderlichen elektrischen Energie zu versorgen. Kann die Einspeiseeinrichtung die erforderliche Leistung auch nur kurzzeitig nicht bereitstellen, so kommt es zu einer Unterspannung des Spannungszwischenkreises. In der Folge dieses Spannungseinbruchs kommt es zum Stillstand der gesamten Maschine. Es muss die Spannung des Zwischenkreises wieder hochgefahren werden. Erst danach kann der Betrieb der Maschine fortgesetzt werden.

Um diesen Fehlerfall zu vermeiden, sind im Stand der Technik verschiedene Lösungen bekannt.

Zum einen ist es bekannt, die Einspeiseeinrichtung entsprechend groß zu dimensionieren. Diese Lösung ist zum einen mit entsprechend hohen Kosten verbunden, sowohl für die Beschaffung der Maschine und deren Komponenten als solche als auch für den Betrieb. Zum anderen ist die Einspeiseeinrichtung auch entsprechend voluminös.

Im Falle einer derartigen Dimensionierung wird den Antrieben von der Einspeiseeinrichtung während eines Großteils der Betriebszeit der Maschine nur ein Bruchteil der möglichen Leistung zugeführt. Die Leistungsreserven der Einspeiseeinrichtung bleiben die meiste Zeit ungenutzt.

Aus diesem Grund ist es zum anderen bekannt, die Einspeiseeinrichtung zwar kleiner zu dimensionieren, den Leistungsbedarf der Antriebe aber zu überwachen. Insbesondere ist es bei manchen Antrieben möglich, eine gewisse Regelabweichung zu tolerieren. Dies sind in der Wortwahl der vorliegenden Erfindung die ersten Antriebe. Bei anderen Antrieben ist die Tolerierung einer Regelabweichung nicht möglich. Dies sind in der Wortwahl der vorliegenden Erfindung die zweiten Antriebe.

Insbesondere bei drehzahlgeregelten Antrieben ist es oftmals möglich, eine Regelabweichung zu tolerieren. Aber auch bei lagegeregelten Antrieben kann zumindest in manchen Fällen eine Regelabweichung toleriert werden. Wenn in einem derartigen Fall die Leistungsanforderungen der Antriebe in ihrer Summe die Kapazität der Einspeiseeinrichtung übersteigen, werden nur diejenigen Antriebe, bei denen eine Regelabweichung nicht toleriert werden kann, normal betrieben. Bei den anderen Antrieben, also denjenigen Antrieben, bei denen eine gewisse Regelabweichung tolerierbar ist, wird den Antrieben ein fester Prozentsatz der Restleistung zugewiesen, welche die Einspeiseeinrichtung diesen Antrieben insgesamt zur Verfügung stellen kann. Wenn also - beispielsweise - die Einspeiseeinrichtung maximal 100 kW zur Verfügung stellen kann und diejenigen Antriebe, bei denen eine Regelabweichung nicht tolerierbar ist, 70 kW benötigen, beträgt die Restleistung 30 kW. Diese 30 kW werden gemäß fest vorgegebener Prozentsätze - beispielsweise zu gleichen Teilen - denjenigen Antrieben zugewiesen, bei denen die Regelabweichung tolerierbar ist. Wenn beispielsweise drei derartige Antriebe vorhanden sind, werden jedem derartigen Antrieb 10 kW zugewiesen.

Im Stand der Technik wird diesen Antrieben also statisch ein gewisser prozentualer Anteil an der für diese Antriebe verfügbaren Gesamtleistung zugewiesen. Die zugewiesene Leistung kann zwar mit der verfügbaren Gesamtleistung variieren. Der (relative) Anteil als solcher, also das Verhältnis der jeweils einem derartigen Antrieb zugeordneten Leistung zur verfügbaren Gesamtleistung, bleibt aber stets konstant.

Durch die Vorgehensweise des Standes der Technik kann es geschehen, dass die verfügbare Gesamtleistung ineffizient verteilt wird. Insbesondere kann es geschehen, dass einer oder mehrerer dieser Antriebe die dem jeweiligen Antrieb zugeordnete Leistung nicht ausschöpft. Um bei dem obigen Beispiel mit 30 kW zu bleiben, die gleichmäßig auf drei Antriebe verteilt werden: Es kann beispielsweise geschehen, dass von diesen drei Antrieben einer 6 kW anfordert, ein anderer 8 kW und der dritte 20 kW, zusammen also 34 kW. Bei einer gleichmäßigen Verteilung der insgesamt verfügbaren 30 kW auf die drei Antriebe würden die drei Antriebe 6 kW, 8 kW und 10 kW erhalten, zusammen also 24 kW. Die Einspeiseeinrichtung könnte also noch 6 kW mehr Leistung liefern. Dennoch wird die dem dritten dieser drei Antriebe zugewiesene Leistung nicht auf 16 kW begrenzt, sondern auf 10 kW.

Die Aufgabe der vorliegenden Erfindung besteht darin, Möglichkeiten zu schaffen, mittels derer eine bessere Ausnutzung der von der Einspeiseeinrichtung zur Verfügung stellbaren Leistung bewirkt wird.

Die Aufgabe wird durch ein Betriebsverfahren mit den Merkmalen des Anspruchs 1 gelöst. Vorteilhafte Ausgestaltungen des Betriebsverfahrens sind Gegenstand der abhängigen Ansprüche 2 bis 10.

Erfindungsgemäß wird ein Betriebsverfahren der eingangs genannten Art dadurch ausgestaltet, dass die Steuereinrichtung im Sonderbetrieb
- unter Auswertung von aktuellen Soll- und/oder Ist-Betriebszuständen der ersten Antriebe für die ersten Antriebe dynamisch einen jeweiligen Anteilsfaktor ermittelt und
- die resultierenden ersten Stromsollwerte durch Modifikation der vorläufigen ersten Stromsollwerte derart ermittelt, dass vom jeweiligen ersten Antrieb nur eine jeweilige Leistung bezogen wird, die sich als Produkt des jeweiligen Anteilsfaktors und der verfügbaren Gesamtleistung ergibt.

Der jeweilige Anteilsfaktor wird also nicht einmalig vorab statisch bestimmt, sondern dynamisch anhand des jeweiligen Betriebszustands der Maschine. Dadurch kann insbesondere in manchen Betriebszuständen der Maschine eine Reduzierung der den ersten Antrieben zugeführten Leistungen ganz vermieden werden und in anderen Fällen zumindest ein optimierter Betrieb erfolgen.

Die Summe der Anteilsfaktoren ergibt vorzugsweise stets den Wert 1. Dadurch wird die verfügbare Gesamtleistung, die den ersten Antrieben von der Einspeiseeinrichtung insgesamt zur Verfügung gestellt werden kann, vollständig ausgenutzt.

Es ist möglich, dass alle Antriebe der Maschine erste Antriebe im Sinne der vorliegenden Erfindung sind. Alternativ ist es möglich, dass die Maschine zusätzlich eine Anzahl von zweiten Antrieben aufweist, die ebenfalls über die Einspeiseeinrichtung mit elektrischer Energie versorgt werden, bei denen die von den zweiten Antrieben bezogenen Leistungen jedoch nicht reduziert werden dürfen. In diesem Fall ist das erfindungsgemäße Betriebsverfahren derart ausgestaltet,
- dass die Steuereinrichtung sowohl im Normalbetrieb als auch im Sonderbetrieb zyklisch für die zweiten Antriebe unter Verwendung eines für den jeweiligen Zyklus gültigen zweiten Basissollwertes des jeweiligen zweiten Antriebs jeweils einen zweiten Stromsollwert ermittelt und den jeweiligen zweiten Antrieb entsprechend dem jeweiligen zweiten Stromsollwert ansteuert und
- dass die Steuereinrichtung die zweiten Stromsollwerte sowohl im Normalbetrieb als auch im Sonderbetrieb derart ermittelt, dass ein Betriebszustand des jeweiligen zweiten Antriebs dem jeweiligen zweiten Basissollwert so weit wie möglich angenähert wird.

Weiterhin ermittelt die Steuereinrichtung in diesem Fall die für die ersten Antriebe in ihrer Gesamtheit verfügbare Gesamtleistung anhand eines Leistungsgrenzwertes der Einspeiseeinrichtung und einer zweiten Leistung, welche von den zweiten Antrieben über die Einspeiseeinrichtung aktuell bezogen wird. Gegebenenfalls kann die Steuereinrichtung in diesem Fall auch den oberen und den unteren Umschaltwert in Abhängigkeit von diesen Größen ermitteln. Dadurch kann das erfindungsgemäße Betriebsverfahren auch dann angewendet werden, wenn die Maschine sowohl erste als auch zweite Antriebe aufweist.

Es ist weiterhin möglich, dass die Einstufung eines bestimmten Antriebs als erster oder als zweiter Antrieb statisch ist. Sie kann aber auch dynamisch sein. Derartige Antriebe werden im Rahmen der vorliegenden Erfindung als dritte Antriebe bezeichnet. Jeden dieser Antriebe behandelt die Steuereinrichtung in Abhängigkeit vom Betriebszustand der Maschine nach Bedarf als ersten Antrieb oder als zweiten Antrieb. Dadurch ergibt sich eine größere Flexibilität beim Betrieb der Maschine.

In einer besonders bevorzugten Ausgestaltung der vorliegenden Erfindung implementiert die Steuereinrichtung für die ersten Antriebe jeweils einen Antriebsregler, dem der jeweilige erste Basissollwert und ein jeweils korrespondierender erster Basisistwert zugeführt werden und mittels dessen die Steuereinrichtung den jeweiligen vorläufigen ersten Stromsollwert ermittelt. Die Antriebsregler weisen in diesem Fall vorzugsweise eine Regelcharakteristik mit einem Integralanteil auf. Insbesondere können sie als PI-Regler realisiert sein. Weiterhin gehen in diesem Fall vorzugsweise die vorläufigen ersten Stromsollwerte in die Ermittlung der Anteilsfaktoren ein. Durch diese Ausgestaltung kann erreicht werden, dass ein bestimmter erster Antrieb, für den zunächst nur ein geringer Anteilsfaktor ermittelt wird, seinen Anteilsfaktor nach und nach vergrößert und dadurch einen "Rückstand", den er anfänglich gegenüber anderen ersten Antrieben erhält, später wieder aufholt.

Für die Ermittlung der Anteilsfaktoren gibt es verschiedene Möglichkeiten.

Beispielsweise ist es möglich, dass die Steuereinrichtung die Anteilsfaktoren derart ermittelt, dass der jeweilige Anteilsfaktor für den jeweiligen ersten Antrieb gleich dem Verhältnis eines von dem jeweiligen ersten Antrieb aufzubringenden Sollmoments zur Summe der von den ersten Antrieben insgesamt aufzubringenden Sollmomente ist. Diese Vorgehensweise weist insbesondere den Vorteil auf, dass sie stets sinnvolle Anteilsfaktoren liefert.

Alternativ ist es möglich, dass die Steuereinrichtung die Anteilsfaktoren derart ermittelt, dass der jeweilige Anteilsfaktor für den jeweiligen ersten Antrieb gleich dem Verhältnis eines für den jeweiligen ersten Antrieb bestimmten Produkts zur Summe von für die ersten Antrieben insgesamt bestimmten Produkte ist und dass das jeweilige Produkt durch ein von dem jeweiligen ersten Antrieb aufzubringendes Sollmoment und eine Drehzahl des jeweiligen ersten Antriebs bestimmt ist. Diese Vorgehensweise weist insbesondere den Vorteil auf, dass die für die einzelnen ersten Antriebe ermittelten Anteilsfaktoren die Leistungsanforderungen der einzelnen ersten Antriebe widerspiegeln. Die Drehzahl des jeweiligen ersten Antriebs kann nach Bedarf die Solldrehzahl oder die Istdrehzahl des jeweiligen ersten Antriebs sein.

Im Falle der Ermittlung anhand der Produkte kann es geschehen, dass ein Anteilsfaktor den Wert 0 annimmt. Insbesondere kann dies geschehen, wenn die Drehzahl des jeweiligen ersten Antriebs 0 ist. In diesem Fall kann auch bei steigendem Sollmoment der Anteilsfaktor nicht größer werden. Um diesen Fall zu umgehen, sind zwei verschiedene Vorgehensweisen möglich.

Zum einen ist es möglich, dass die Steuereinrichtung immer dann, wenn die jeweilige Drehzahl eines ersten Antriebs unterhalb einer jeweiligen Minimaldrehzahl oberhalb von 0 liegt, zur Ermittlung des jeweiligen Produkts die jeweilige Drehzahl durch die jeweilige Minimaldrehzahl ersetzt. Zum anderen ist es möglich, dass die Steuereinrichtung immer dann, wenn das für einen jeweiligen ersten Antrieb ermittelte jeweilige Produkt unterhalb eines jeweiligen Minimalproduktwertes oberhalb von 0 liegt, im Rahmen der Ermittlung der Anteilsfaktoren das jeweilige Produkt durch den jeweiligen Minimalproduktwert ersetzt. Die beiden Vorgehensweisen können auch miteinander kombiniert werden.

Eine weitere Möglichkeit zur Ermittlung der Anteilsfaktoren besteht darin, dass die Steuereinrichtung für die ersten Antriebe jeweils einen ersten Basisistwert entgegennimmt, dass die Steuereinrichtung für die ersten Antriebe jeweils eine Differenz des jeweiligen ersten Basisistwertes vom jeweiligen ersten Basissollwert ermittelt und dass die Steuereinrichtung die Anteilsfaktoren in Abhängigkeit von den ermittelten Differenzen ermittelt. Diese Vorgehensweise weist den Vorteil auf, dass Regelabweichungen, die aufgrund der Modifikation der ersten Stromsollwerte erforderlich sind, möglichst gleichmäßig auf alle ersten Antriebe verteilt werden.

Die Aufgabe wird weiterhin durch ein Steuerprogramm mit den Merkmalen des Anspruchs 11 gelöst. Erfindungsgemäß wird ein Steuerprogramm der eingangs genannten Art derart ausgestaltet, dass die Abarbeitung des Maschinencodes durch die Steuereinrichtung bewirkt, dass die Steuereinrichtung die Maschine gemäß einem erfindungsgemäßen Betriebsverfahren betreibt.

Die Aufgabe wird weiterhin durch eine Steuereinrichtung mit den Merkmalen des Anspruchs 12 gelöst. Erfindungsgemäß wird eine Steuereinrichtung der eingangs genannten Art mit einem erfindungsgemäßen Steuerprogramm programmiert, so dass die Steuereinrichtung die Maschine gemäß einem erfindungsgemäßen Betriebsverfahren betreibt.

Die Aufgabe wird weiterhin durch eine Maschine mit den Merkmalen des Anspruchs 13 gelöst. Erfindungsgemäß ist bei einer Maschine der eingangs genannten Art die Steuereinrichtung erfindungsgemäß ausgebildet.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: ein Blockschaltbild einer Maschine,
- FIG 2 bis 4: Ablaufdiagramme,
- FIG 5: einen Regelkreis für einen ersten Antrieb und
- FIG 6 bis 9: Ablaufdiagramme.

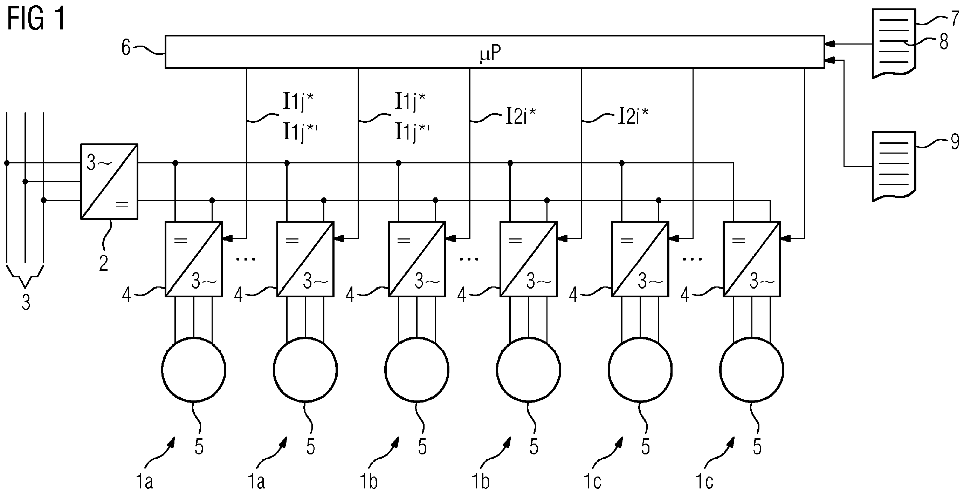

Gemäß FIG 1 weist eine Maschine zumindest mehrere erste Antriebe 1a auf. In vielen Fällen sind zusätzlich auch zweite Antriebe 1b vorhanden, in manchen Fällen - alternativ oder zusätzlich zu den zweiten Antrieben 1b - auch dritte Antriebe 1c. Die ersten, zweiten und dritten Antriebe 1a, 1b, 1c wirken im Rahmen einer Steuerungsaufgabe zusammen. Die Steuerungsaufgabe kann prinzipiell beliebiger Natur sein. Beispielsweise können die ersten, zweiten und dritten Antriebe 1a, 1b, 1c Bestandteile einer Werkzeugmaschine sein.

Bezüglich der Ausgestaltung und der vom Prinzip her möglichen Betriebsweisen der Antriebe 1a, 1b, 1c ist es möglich, dass keine Unterschiede zwischen den verschiedenen Antrieben 1a, 1b, 1c bestehen. Die Unterscheidung zwischen den Antrieben 1a, 1b, 1c wird deshalb getroffen, weil im Rahmen der technologischen Aufgabe, die mittels der Maschine gelöst werden soll, die ersten, zweiten und dritten Antriebe 1a, 1b, 1c auf unterschiedliche Art und Weise angesteuert werden können oder müssen. Dies wird aus den späteren Ausführungen noch ersichtlich werden.

Die Maschine weist weiterhin eine Einspeiseeinrichtung 2 auf. Die Einspeiseeinrichtung 2 kann beispielsweise entsprechend der Darstellung in FIG 1 als Gleichrichter ausgebildet sein, der aus einem (meist dreiphasigen) Versorgungsnetz 3 gespeist wird und Umrichtern 4 der Antriebe 1a, 1b, 1c eine Gleichspannung U zuführt. Alternativ kann die Einspeiseeinrichtung 2 als rückspeisefähiger Umrichter ausgebildet sein. Die Umrichter 4 setzen die Gleichspannung U wiederum in die Spannungen und Ströme eines (meist dreiphasigen) Drehstromsystems um, mittels dessen die elektrischen Maschinen 5 der Antriebe 1a, 1b, 1c gespeist werden. Über die Einspeiseeinrichtung 2 werden die Antriebe 1a, 1b, 1c also mit elektrischer Energie versorgt.

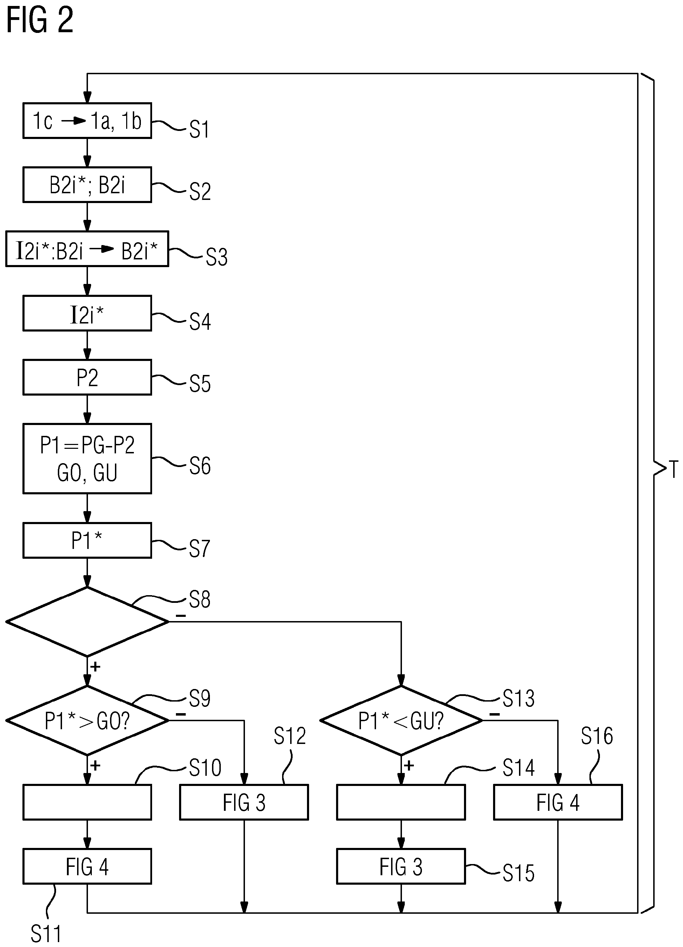

Die Maschine weist weiterhin eine Steuereinrichtung 6 auf, welche die ersten Antriebe 1a sowie - falls vorhanden - auch die zweiten Antriebe 1b und die dritten Antriebe 1c steuert. Die Steuereinrichtung 6 ist, wie durch die Angabe des Kürzel "µP" angedeutet ist, in der Regel softwareprogrammierbar. Die Steuereinrichtung 6 ist daher mit einem Steuerprogramm 7 programmiert. Das Steuerprogramm 7 umfasst Maschinencode 8, der von der Steuereinrichtung 6 abarbeitbar ist. Die Programmierung der Steuereinrichtung 6 mit dem Steuerprogramm 7 bzw. konkret die Abarbeitung des Maschinencodes 8 durch die Steuereinrichtung 6 bewirkt, dass die Steuereinrichtung 6 die Maschine gemäß einem Betriebsverfahren betreibt, das nachstehend in Verbindung mit FIG 2 und später auch den weiteren FIG näher erläutert wird.

Gemäß FIG 2 bestimmt die Steuereinrichtung 6 zunächst in einem Schritt S1 für jeden dritten Antrieb 1c, ob der jeweilige dritte Antrieb 1c im Rahmen der nachfolgenden Schritte S2 bis S16 wie ein erster Antrieb 1a oder wie ein zweiter Antrieb 1b behandelt wird. Die Bestimmung kann individuell für jeden einzelnen dritten Antrieb 1c erfolgen. Unabhängig davon, ob sie für jeden einzelnen dritten Antrieb 1c individuell erfolgt oder ob die dritten Antriebe 1c gruppenweise als erste oder zweite Antriebe 1a, 1b behandelt werden oder ob alle dritten Antriebe 1c gleichermaßen entweder als erste oder als zweite Antriebe 1a, 1b behandelt werden, erfolgt die Bestimmung des Schrittes S1 in Abhängigkeit vom Betriebszustand der Maschine.

Hierzu ein Beispiel: Man nehme an, die Maschine sei eine Werkzeugmaschine. Die Werkzeugmaschine weise mehrere drehzahlgeregelte Spindeln auf, mittels derer jeweils ein Werkzeug, welches ein Werkstück bearbeitet, rotiert wird. In diesem Fall sind die Antriebe für die Spindeln erste Antriebe 1a im Sinne der vorliegenden Erfindung. Man nehme weiterhin an, zu einem bestimmten Zeitpunkt der Bearbeitung werde mittels dreier weiterer Antriebe eines der Werkzeuge relativ zum Werkstück bewegt und befinde sich zu diesem Zeitpunkt im Eingriff mit dem Werkstück. Dann müssen diese Antriebe zu diesem Zeitpunkt als zweite Antriebe 1b behandelt werden. Man nehme weiterhin an, mittels dreier weiterer Antriebe werde ein anderes der Werkzeuge relativ zum Werkstück lagegeregelt verfahren, befinde sich zu diesem Zeitpunkt jedoch nicht im Eingriff mit dem Werkstück. Beispielsweise kann gerade ein Werkzeugwechsel erfolgen. Dann können diese Antriebe zu diesem Zeitpunkt entweder als zweite Antriebe 1b oder als erste Antriebe 1a behandelt werden. Zu einem anderen Zeitpunkt kann sich selbstverständlich eine andere Situation ergeben. Beispielsweise können zu diesem anderen Zeitpunkt beide Werkzeuge im Eingriff mit dem Werkstück stehen. Dann müssen die Antriebe beider Werkzeuge als zweite Antriebe 1b behandelt werden. Zu einem wieder anderen Zeitpunkt können beispielsweise beide Werkzeuge nicht im Eingriff mit dem Werkstück stehen. Dann können die Antriebe beider Werkzeuge alternativ als erste Antriebe 1a oder als zweite Antriebe 1b behandelt werden. Wird mindestens einer der Antriebe, mittels welcher die Werkzeuge lagegeregelt verfahren werden, je nach Betriebszustand als erster Antrieb 1a oder als zweiter Antrieb 1b behandelt, handelt es sich bei diesem Antrieb um einen dritten Antrieb im Sinne der vorliegenden Erfindung. Wird er stets als zweiter Antrieb 1b behandelt, handelt es sich um einen zweiten Antrieb 1b.

Es sind natürlich auch andere Maschinen und andere Situationen denkbar, in denen dritte Antriebe 1c je nach Betriebszustand der Maschine als erste Antriebe 1a oder als zweite Antriebe 1b behandelt werden können. Falls keine dritten Antriebe 1c vorhanden sind, kann der Schritt S1 ersatzlos entfallen.

Nachfolgend wird nur noch auf die ersten Antriebe 1a und die zweiten Antriebe 1b eingegangen, nicht aber auf die dritten Antriebe 1c. Dies ist dadurch begründet, dass jeder dritte Antrieb 1c zwar nicht statisch, aber zum jeweils aktuellen Zeitpunkt jeweils als erster oder zweiter Antrieb 1a, 1b angesehen werden kann.

In einem Schritt S2 werden der Steuereinrichtung 6 für die zweiten Antriebe 1b Basissollwerte B2i* (mit i = 1, 2, ..., Anzahl der zweiten Antriebe 1b) bekannt. Die Basissollwerte B2i* können beispielsweise Lagesollwerte oder Drehzahlsollwerte sein. Sie können beispielsweise durch ein Nutzprogramm 9 bestimmt sein. Im Falle einer Werkzeugmaschine wäre das Nutzprogramm 9 beispielsweise ein Teileprogramm. In vielen Fällen werden der Steuereinrichtung 6 im Schritt S2 weiterhin auch korrespondierende Basisistwerte B2i bekannt. Die Steuereinrichtung 6 ermittelt sodann in einem Schritt S3 unter Verwendung der Basissollwerte B2i* und - sofern vorhanden - auch der Basisistwerte B2i - für die zweiten Antriebe 1b einen jeweiligen Stromsollwert I2i*. Die Steuereinrichtung 6 ermittelt den jeweiligen Stromsollwert I2i* derart, dass ein Betriebszustand des jeweiligen zweiten Antriebs 1b dem jeweiligen zweiten Basissollwert B2i* so weit wie möglich angenähert wird. Die entsprechende Ermittlung ist Fachleuten allgemein bekannt und muss daher nicht näher erläutert werden.

In einem Schritt S4 steuert die Steuereinrichtung 6 sodann die zweiten Antriebe 1b entsprechend dem jeweiligen ermittelten Stromsollwert I2i* an. Auch die Ansteuerung ist Fachleuten allgemein bekannt und muss daher nicht näher erläutert werden.

In einem Schritt S5 ermittelt die Steuereinrichtung 6 eine zweite Leistung P2. Die zweite Leistung P2 ist diejenige Leistung, welche den zweiten Antriebe 1b in ihrer Gesamtheit zugeführt werden muss, damit die zweiten Antriebe 1b die durch die Schritte S2 und S3 definierte Betriebsweise ausführen. Beispielsweise kann die Steuereinrichtung 6 für jeden zweiten Antrieb 1b die jeweilige Drehzahl (Soll- oder Istwert) ermitteln und die Drehzahl mit dem von dem jeweiligen zweiten Antrieb 1b aufgebrachten Moment multiplizieren. Dieses Produkt entspricht - bis auf einen für alle zweiten Antriebe 1b einheitlichen konstanten Anpassungsfaktor - direkt der von dem jeweiligen zweiten Antrieb 1b bezogenen Leistung. Das Moment kann ohne weiteres aus dem Strom (Soll- oder Istwert) ermittelt werden.

In einem Schritt S6 ermittelt die Steuereinrichtung 6 sodann eine für die ersten Antriebe 1a in ihrer Gesamtheit verfügbare Gesamtleistung P1.

Aufgrund des Umstands, dass im vorliegenden Fall das Vorhandensein der zweiten Antriebe 1b vorausgesetzt wird, ermittelt die Steuereinrichtung 6 im Schritt S6 zunächst einen Leistungsgrenzwert PG der Einspeiseeinrichtung 2 und subtrahiert von dem Leistungsgrenzwert PG die zweite Leistung P2. Der Leistungsgrenzwert PG kann der Steuereinrichtung 6 fest vorgegeben sein oder von der Steuereinrichtung 6 beispielsweise anhand von Betriebsparametern der Einspeiseeinrichtung 2 ermittelt werden. Die Differenz ergibt die für die ersten Antriebe 1a verfügbare Gesamtleistung P1.

Falls die zweiten Antriebe 1b nicht vorhanden sind, können die Schritte S2 bis S5 ersatzlos entfallen. In diesem Fall kann weiterhin die verfügbare Gesamtleistung P1 beispielsweise gleich der Leistung sein, die von der Einspeiseeinrichtung 2 insgesamt zur Verfügung gestellt werden kann, also gleich dem Leistungsgrenzwert PG.

Weiterhin ermittelt die Steuereinrichtung 6 im Schritt S6 einen oberen Umschaltwert GO und einen unteren Umschaltwert GU. Der obere Umschaltwert GO ist kleiner als die verfügbare Gesamtleistung P1, in der Regel geringfügig kleiner. Dadurch wird erreicht, dass die Steuereinrichtung 6 rechtzeitig vor dem Erreichen der verfügbaren Gesamtleistung P1 in den Sonderbetrieb übergeht. Der untere Umschaltwert GU kann gleich dem oberen Umschaltwert GO sein. Zumindest ist der untere Umschaltwert GU aber nicht größer als der obere Umschaltwert GO. Vorzugsweise ist der untere Umschaltwert GU kleiner als der obere Umschaltwert GO. Dadurch wird eine Schalthysterese beim Umschalten zwischen Normalbetrieb und Sonderbetrieb erreicht, so dass die Betriebsweise der Maschine insgesamt stabiler ist.

In einem Schritt S7 ermittelt die Steuereinrichtung 6 sodann für die ersten Antriebe 1a einen Leistungsbezug P1* der ersten Antriebe 1a. Der Leistungsbezug P1* ist derjenige Wert, der von den ersten Antrieben 1a insgesamt angefordert wird. Er ergibt sich durch die Summe der von den ersten Antrieben 1a einzeln angeforderten Leistungen. Die angeforderten Leistungen können beispielsweise - so wie obenstehend für die zweiten Antriebe 1b erläutert - durch das Produkt von Sollmoment und Drehzahl (Soll- oder Istwert) bestimmt sein.

In einem Schritt S8 prüft die Steuereinrichtung 6, ob sie sich in einem Normalbetrieb befindet. Wenn dies der Fall ist, prüft sie weiterhin in einem Schritt S9, ob der Leistungsbezug P1* den oberen Umschaltwert GO überschreitet. Wenn dies der Fall ist, nimmt die Steuereinrichtung 6 in einem Schritt S10 einen Sonderbetrieb an und führt sodann in einem Schritt S11 denjenigen Teil des erfindungsgemäßen Betriebsverfahrens aus, den sie nur im Sonderbetrieb ausführt. Anderenfalls führt die Steuereinrichtung 6 in einem Schritt S12 denjenigen Teil des erfindungsgemäßen Betriebsverfahrens aus, den sie nur im Normalbetrieb ausführt.

Wenn die Steuereinrichtung im Schritt S8 festgestellt hat, dass sie sich im Sonderbetrieb befindet, geht sie zu einem Schritt S13 über. Im Schritt S13 prüft die Steuereinrichtung 6, ob der Leistungsbezug P1* den unteren Umschaltwert GU unterschreitet. Wenn dies der Fall ist, nimmt die Steuereinrichtung 6 in einem Schritt S14 den Normalbetrieb an und führt sodann in einem Schritt S15 denjenigen Teil des erfindungsgemäßen Betriebsverfahrens aus, den sie nur im Normalbetrieb ausführt. Anderenfalls führt die Steuereinrichtung 6 in einem Schritt S16 denjenigen Teil des erfindungsgemäßen Betriebsverfahrens aus, den sie nur im Sonderbetrieb ausführt.

Obenstehend wurde die jeweilige verfügbare Gesamtleistung P1 dadurch ermittelt, dass die zweite Leistung P2 der zweiten Antriebe 1b vom Leistungsgrenzwert PG subtrahiert wurde. Es ist selbstverständlich ebenso möglich und völlig gleichwertig, die Summe der zweiten Leistung P2 (oder den zugehörigen Sollwert) und des Leistungsbezugs P1* zu bilden und diese Summe mit dem oberen Umschaltwert GO und dem unteren Umschaltwert GU zu vergleichen. Der obere Umschaltwert GO und der untere Umschaltwert GU müssen in diesem Fall selbstverständlich entsprechend angepasst sein.

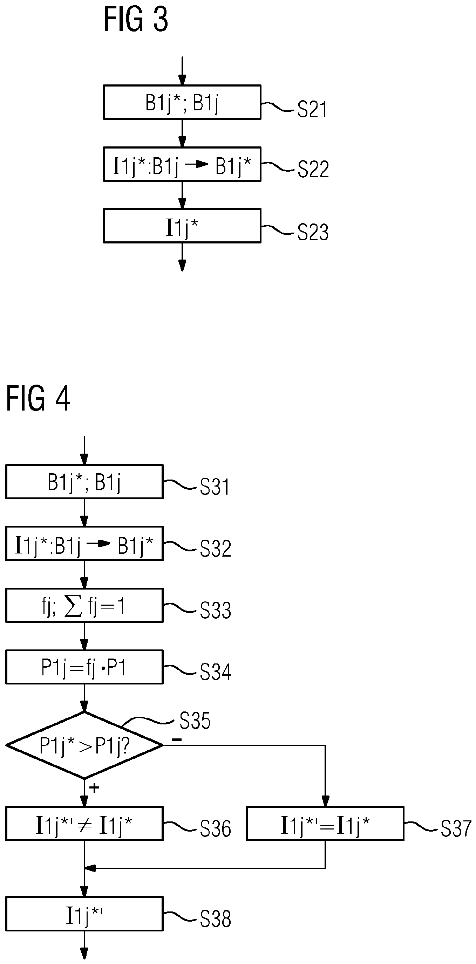

Nachfolgend wird in Verbindung mit FIG 3 derjenige Teil des erfindungsgemäßen Betriebsverfahrens erläutert, den die Steuereinrichtung 6 nur im Normalbetrieb ausführt. FIG 3 zeigt also eine mögliche Implementierung der Schritte S12 und S15. Gemäß FIG 3 werden der Steuereinrichtung 6 in einem Schritt S21 für die ersten Antriebe 1a Basissollwerte B1j* (mit j = 1, 2, ..., Anzahl der ersten Antriebe 1a) bekannt. Die Basissollwerte B1j* können beispielsweise Lagesollwerte oder Momentsollwerte sein. Meist handelt es sich um Drehzahlsollwerte. Sie können beispielsweise ebenfalls durch das Nutzprogramm 9 bestimmt sein. In vielen Fällen werden der Steuereinrichtung 6 im Schritt S21 weiterhin auch korrespondierende Basisistwerte B1j bekannt. Die Steuereinrichtung 6 ermittelt sodann in einem Schritt S22 unter Verwendung der Basissollwerte B1j* und - sofern vorhanden - auch der Basisistwerte B1j - für die ersten Antriebe 1a einen jeweiligen Stromsollwert I1j*. Die Steuereinrichtung 6 ermittelt den jeweiligen Stromsollwert I1j* derart, dass ein Betriebszustand des jeweiligen ersten Antriebs 1a dem jeweiligen ersten Basissollwert B1j* so weit wie möglich angenähert wird. Die entsprechende Ermittlung ist Fachleuten allgemein bekannt und muss daher nicht näher erläutert werden. In einem Schritt S23 steuert die Steuereinrichtung 6 sodann die ersten Antriebe 1a entsprechend den jeweiligen ermittelten Stromsollwerten I1j* an. Auch die Ansteuerung ist Fachleuten allgemein bekannt und muss daher nicht näher erläutert werden.

Die Schritte S21 bis S23 korrespondieren inhaltlich somit mit den Schritten S2 bis S4. Sie werden jedoch im Gegensatz zu den Schritten S2 bis S4 nicht für die zweiten Antriebe 1b ausgeführt, sondern für die ersten Antriebe 1a.

Nachfolgend wird in Verbindung mit FIG 4 derjenige Teil des erfindungsgemäßen Betriebsverfahrens erläutert, den die Steuereinrichtung 6 nur im Sonderbetrieb ausführt. FIG 4 zeigt also eine mögliche Implementierung der Schritte S11 und S16.

Gemäß FIG 4 werden im Sonderbetrieb zunächst Schritte S31 und S32 ausgeführt. Die Schritte S31 und S32 korrespondieren 1:1 mit den Schritten S21 und S22 von FIG 3.

In einem Schritt S33 ermittelt die Steuereinrichtung 6 für die ersten Antriebe 1a jeweils einen Anteilsfaktor fj (mit j = 1, 2, ..., Anzahl der ersten Antriebe 1a). Vorzugsweise ermittelt die Steuereinrichtung 6 die Anteilsfaktoren fj stets derart, dass die Summe der Anteilsfaktoren fj den Wert 1 ergibt. Bevorzugte Ermittlungsverfahren für die Anteilsfaktoren fj werden später noch näher erläutert werden. Unabhängig von der konkreten Art und Weise der Ermittlung ermittelt die Steuereinrichtung 6 die Anteilsfaktoren fj jedoch unter Auswertung von aktuellen Soll- und/oder Ist-Betriebszuständen der ersten Antriebe 1a. Weiterhin ermittelt die Steuereinrichtung 6 die Anteilsfaktoren fj dynamisch.

In einem Schritt S34 bestimmt die Steuereinrichtung 6 sodann für die ersten Antriebe 1a eine jeweilige Maximalleistung P1j. Die Maximalleistung P1j für den jeweiligen ersten Antrieb 1a ergibt sich als Produkt des jeweiligen Anteilsfaktors fj und der für die ersten Antriebe 1a verfügbaren Gesamtleistung P1.

In einem Schritt S35 prüft die Steuereinrichtung 6 einzeln für jeden ersten Antrieb 1a, ob dessen erwarteter Leistungsbezug P1j* - definiert beispielsweise durch die Drehzahl (Sollwert oder Istwert) und den Stromsollwert I1j* des jeweiligen ersten Antriebs 1a - die für den jeweiligen ersten Antrieb 1a ermittelte Maximalleistung P1j übersteigt. Wenn dies der Fall ist, ermittelt die Steuereinrichtung 6 in einem Schritt S36 durch Modifizieren des im Schritt S32 ermittelten Stromsollwertes I1j* einen für diesen ersten Antrieb 1a resultierenden Stromsollwert I1j*'. Die Modifikation erfolgt derart, dass vom jeweiligen ersten Antrieb 1a nur eine Leistung bezogen wird, die gleich der für diesen ersten Antrieb 1a ermittelten Maximalleistung P1j ist. Anderenfalls übernimmt die Steuereinrichtung 6 in einem Schritt S37 den bereits ermittelten Stromsollwert I1j* als resultierenden Stromsollwert I1j*'.

In einem Schritt S38 steuert die Steuereinrichtung 6 die ersten Antriebe 1a entsprechend den jeweiligen ermittelten Stromsollwerten I1j* an. Der Schritt S38 korrespondiert also mit dem Schritt S23 von FIG 3.

Die im Schritt S32 ermittelten Stromsollwerte I1j* sind also nur vorläufige Stromsollwerte I1j*, die entweder - falls für den jeweiligen ersten Antrieb 1a der Schritt S37 ausgeführt wird - gleich dem für diesen ersten Antrieb 1a resultierenden Stromsollwert I1j*' sind oder aber - falls für den jeweiligen ersten Antrieb 1a der Schritt S36 ausgeführt wird - im Schritt S36 modifiziert werden.

Die Schritte S21 bis S38 der FIG 3 und 4 stellen, wie bereits erwähnt, Implementierungen der Schritte S11, S12, S15 und S16 dar. Sie sind also in die Ausführung der Schritte S1 bis S16 von FIG 2 eingebunden. Die Ausführung der Schritte S1 bis S16 von FIG 2 erfolgt jedoch ersichtlich zyklisch. Aufgrund dieses Umstandes sind sowohl die Basissollwerte B1j*, B2i* als auch die Basisistwerte B1j, B2i als auch die Stromsollwerte I1j*, I2i* und die Anteilsfaktoren fj und auch die anderen ermittelten Werte P1, P2, P1* usw. stets nur für den jeweiligen Zyklus gültig. Eine Zykluszeit T liegt meist im einstelligen Millisekundenbereich, manchmal auch geringfügig darunter.

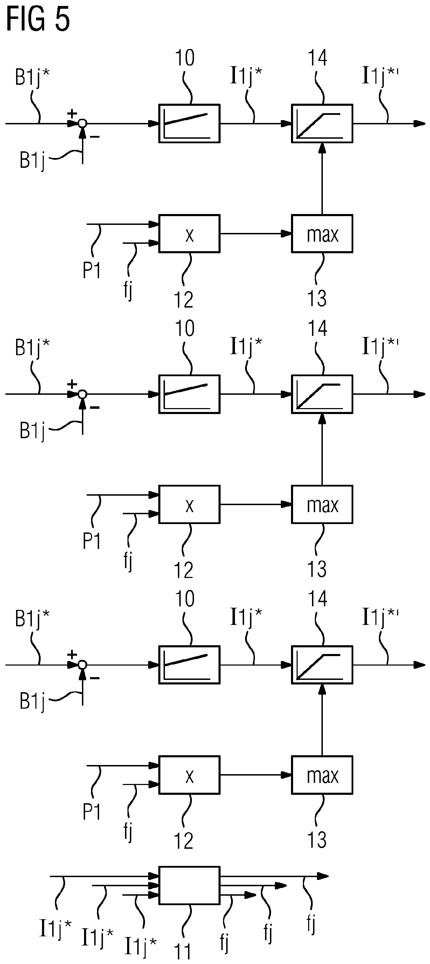

FIG 5 zeigt eine bevorzugte Ausgestaltung eines Regelkreises für einen ersten Antrieb 1a. Die Regelkreise für die zweiten Antriebe 1b und gegebenenfalls auch die dritten Antriebe 1c können in analoger Weise ausgestaltet sein. Dies ist im Rahmen der vorliegenden Erfindung jedoch von untergeordneter Bedeutung.

Gemäß FIG 5 implementiert die Steuereinrichtung 6 für die ersten Antriebe 1a jeweils einen Antriebsregler 10. Dargestellt ist dies in FIG 5 - rein beispielhaft - für drei erste Antriebe 1a. Dem jeweiligen Antriebsregler 10 werden der jeweilige Basissollwert B1j* und der jeweils korrespondierende Basisistwert B1j zugeführt. Mittels des jeweiligen Antriebsreglers 10 ermittelt die Steuereinrichtung 6 den jeweiligen vorläufigen Stromsollwert I1j*. Der jeweilige Antriebsregler 10 weist vorzugsweise eine Regelcharakteristik mit einem Integralanteil auf. Insbesondere kann er entsprechend der Darstellung in FIG 5 als PI-Regler realisiert sein.

Vorzugsweise implementiert die Steuereinrichtung 6 weiterhin einen Ermittlungsblock 11. Dem Ermittlungsblock 11 werden die mittels der Antriebsregler 10 ermittelten vorläufigen Stromsollwerte I1j* zugeführt. In dem Ermittlungsblock 11 werden die Anteilsfaktoren fj ermittelt. Die Ermittlung in dem Ermittlungsblock 11 erfolgt unter Berücksichtigung der dem Ermittlungsblock 11 zugeführten vorläufigen Stromsollwerte I1j*.

Soweit erforderlich, können dem Ermittlungsblock 11 weitere Größen zugeführt werden, beispielsweise die Solldrehzahlen oder die Istdrehzahlen der ersten Antriebe 1a. Dies ist in FIG 5 jedoch nicht mit dargestellt.

Die ermittelten Anteilsfaktoren fj werden sodann Multiplizierern 12 zugeführt, in denen sie mit der verfügbaren Gesamtleistung P1 multipliziert werden. Das jeweilige Ergebnis wird einem jeweiligen Ermittlungsblock 13 zugeführt, der - beispielsweise unter zusätzlicher Verwertung einer Drehzahl des jeweiligen ersten Antriebs 1a - einen zugehörigen Maximalwert für den jeweiligen Stromsollwert I1j* ermittelt. Der jeweilige Maximalwert wird einem jeweiligen Begrenzer 14 zugeführt, der den jeweiligen Stromsollwert I1j* entsprechend begrenzt, sofern dies erforderlich ist. Dadurch wird, soweit erforderlich, der jeweilige vorläufige Stromsollwert I1j* zum jeweiligen resultierenden Stromsollwert I1j* modifiziert.

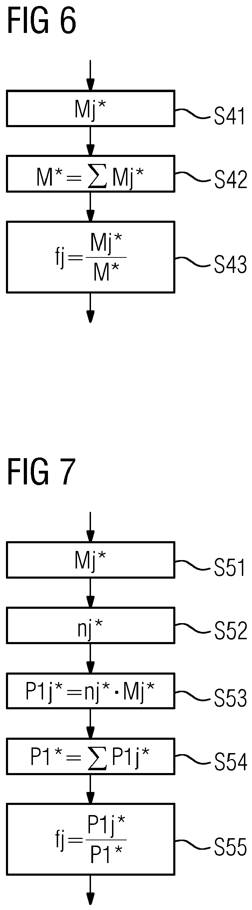

Nachfolgend werden in Verbindung mit den FIG 6 bis 9 mögliche konkrete Vorgehensweisen zur Ermittlung der Anteilsfaktoren fj näher erläutert. Die FIG 6 bis 9 zeigen also jeweils eine mögliche Implementierung des Schrittes S33 von FIG 4.

So ist es beispielsweise entsprechend der Darstellung in FIG 6 möglich, dass die Steuereinrichtung 6 in einem Schritt S41 für die ersten Antriebe 1a jeweils ein Sollmoment Mj* ermittelt. Die Steuereinrichtung 6 kann das jeweilige Sollmoment Mj* insbesondere anhand des jeweiligen vorläufigen Stromsollwertes I1j* ermitteln. In einem Schritt S42 ermittelt die Steuereinrichtung 6 sodann durch Bilden der Summe der Sollmomente Mj* ein Gesamtmoment M*. In einem Schritt S43 dividiert die Steuereinrichtung 6 schließlich das jeweilige Sollmoment Mj* durch das Gesamtmoment M* und ermittelt so den jeweiligen Anteilsfaktor fj .

Alternativ ist es beispielsweise entsprechend der Darstellung in FIG 7 möglich, dass die Steuereinrichtung 6 in einem Schritt S51 für die ersten Antriebe 1a jeweils ein Sollmoment Mj* ermittelt. Der Schritt S51 korrespondiert inhaltlich mit dem Schritt S41 von FIG 6. In einem Schritt S52 ermittelt die Steuereinrichtung 6 sodann für die ersten Antriebe 1a jeweils eine Solldrehzahl nj*. In einem Schritt S53 ermittelt die Steuereinrichtung 6 sodann durch Bilden des Produkts von jeweiligem Sollmoment Mj* und jeweiliger Solldrehzahl nj* eine jeweilige Sollleistung P1j*. In einem Schritt S54 ermittelt die Steuereinrichtung 6 durch Bilden der Summe der Sollleistungen P1j* eine erwartete Gesamtleistung. Die erwartete Gesamtleistung stimmt mit dem erwarteten Leistungsbezug P1*
überein. In einem Schritt S55 dividiert die Steuereinrichtung 6 schließlich die jeweilige Sollleistung P1j* durch die erwartete Gesamtleistung und ermittelt so den jeweiligen Anteilsfaktor fj .

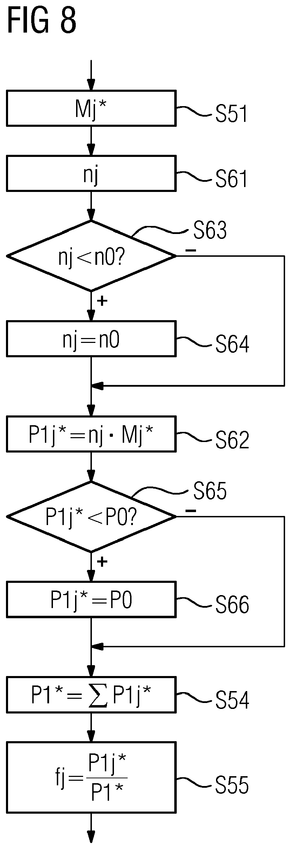

Die Vorgehensweise von FIG 8 korrespondiert über weite Strecken mit der von FIG 7. Es sind jedoch die Schritte S52 und S53 durch Schritte S61 und S62 ersetzt. Im Schritt S61 ermittelt die Steuereinrichtung 6 jeweils deren Istdrehzahl nj. Im Schritt S62 ermittelt die Steuereinrichtung 6 die jeweilige Sollleistung P1j* durch Bilden des Produkts von jeweiligem Sollmoment Mj* und jeweiliger Istdrehzahl nj.

Gemäß FIG 8 können weiterhin Schritte S63 und S64 vorhanden sein. Im Schritt S63 prüft die Steuereinrichtung 6, ob für den jeweiligen ersten Antrieb 1a dessen Istdrehzahl nj unterhalb einer Minimaldrehzahl n0 liegt. Wenn dies der Fall ist, ersetzt die Steuereinrichtung 6 im Rahmen der Ermittlung des jeweiligen Produkts - also der jeweiligen Sollleistung P1j* - die Istdrehzahl nj durch die Minimaldrehzahl n0. Dadurch wird verhindert, dass der Anteilsfaktor fj für den jeweiligen ersten Antrieb 1a zu 0 wird, wenn seine Istdrehzahl nj bei 0 liegt. Die Minimaldrehzahl n0 ihrerseits ist größer als 0.

Alternativ oder zusätzlich zu den Schritten S63 und S64 können auch Schritte S65 und S66 vorhanden sein. Im Schritt S65 prüft die Steuereinrichtung 6, ob für den jeweiligen ersten Antrieb 1a das ermittelte jeweilige Produkt P1j* unterhalb eines jeweiligen Minimalproduktwertes P0 liegt. Wenn dies der Fall ist, ersetzt die Steuereinrichtung 6 im Rahmen der Ermittlung der Anteilsfaktoren fj das ermittelte Produkt P1j* durch den jeweiligen Minimalproduktwert P0. Auch dadurch wird verhindert, dass der Anteilsfaktor fj für den jeweiligen ersten Antrieb 1a zu 0 wird, wenn seine Istdrehzahl nj bei 0 liegt. Der Minimalproduktwert P0 seinerseits ist größer als 0.

Die optionalen Ausgestaltungen gemäß den Schritten S63 bis S66 können mit entsprechender Anpassung nach Bedarf auch bei der Ausgestaltung gemäß FIG 7 implementiert sein.

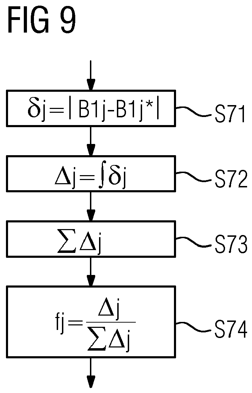

FIG 9 zeigt eine weitere Möglichkeit zur Ermittlung der Anteilsfaktoren fj. Im Rahmen der Ausgestaltung von FIG 9 ermittelt die Steuereinrichtung 6 in einem Schritt S71 für die ersten Antriebe 1a jeweils die Differenz δj des jeweiligen Basisistwertes B1j und des jeweiligen Basissollwertes B1j*. Aufbauend auf den Differenzen δj ermittelt die Steuereinrichtung 6 sodann die Anteilsfaktoren fj. Beispielsweise kann die Steuereinrichtung 6 in einem Schritt S72 jeweils das Integral Δj der jeweiligen Differenz δj ermitteln, in einem Schritt S73 die Summe der Integrale Δj bilden und schließlich in einem Schritt S74 den jeweiligen Anteilsfaktor fj dadurch ermitteln, dass sie das jeweilige Integral Δj durch die Summe der Integrale Δj dividiert. Es sind aber auch andere Vorgehensweisen möglich.

Zusammengefasst betrifft die vorliegende Erfindung somit folgenden Sachverhalt:
Eine Maschine weist mehrere erste Antriebe 1a auf. Eine Steuereinrichtung 6 der Maschine überwacht einen Leistungsbezug P1*, den die Maschine über eine die ersten Antriebe 1a mit elektrischer Energie versorgende Einspeiseeinrichtung 2 bezieht. Die Steuereinrichtung 6 schaltet die Maschine von einem Normalbetrieb in einen Sonderbetrieb bzw. vom Sonderbetrieb in den Normalbetrieb um, sobald der Leistungsbezug P1* einen oberen Umschaltwert GO überschreitet bzw. einen unteren Umschaltwert GU unterschreitet. Die Steuereinrichtung 6 ermittelt in beiden Betriebsarten zyklisch für die ersten Antriebe 1a unter Verwendung von für den jeweiligen Zyklus gültigen ersten Basissollwerten B1j* der ersten Antriebe 1a vorläufige erste Stromsollwerte I1j*, wobei sie die vorläufigen ersten Stromsollwerte I1j* derart ermittelt, dass Betriebszustände der ersten Antriebe 1a den ersten Basissollwerten B1j* so weit wie möglich angenähert werden. Sie steuert die ersten Antriebe 1a in beiden Betriebsarten entsprechend resultierenden ersten Stromsollwerten I1j*, I1j*' an. Im Normalbetrieb stimmen die resultierenden ersten Stromsollwerte I1j* mit den vorläufigen ersten Stromsollwerten I1j* überein. Im Sonderbetrieb ermittelt die Steuereinrichtung eine für die ersten Antriebe 1a in ihrer Gesamtheit verfügbare Gesamtleistung P1. Weiterhin ermittelt sie unter Auswertung von aktuellen Soll- und/oder Ist-Betriebszuständen der ersten Antriebe 1a für die ersten Antriebe 1a dynamisch einen jeweiligen Anteilsfaktor fj.
Schließlich ermittelt sie die resultierenden ersten Stromsollwerte I1j*' durch Modifikation der vorläufigen ersten Stromsollwerte I1j* derart, dass vom jeweiligen ersten Antrieb 1a nur eine jeweilige Leistung bezogen wird, die sich als Produkt des jeweiligen Anteilsfaktors fj und der verfügbaren Gesamtleistung P1 ergibt.

Die vorliegende Erfindung weist viele Vorteile auf. Insbesondere wird immer die volle Leistungsreserve der Einspeiseeinrichtung 2 auf die ersten Antriebe 1a verteilt. Dadurch kann in vielen Fällen, bei denen im Stand der Technik eine Leistungsbegrenzung erforderlich ist, eine Leistungsbegrenzung vermieden werden. Wenn dennoch eine Leistungsbegrenzung erforderlich ist, kann diese auf das minimal erforderliche Ausmaß beschränkt werden. Um nochmals auf das Beispiel mit 30 kW zurückzukommen: Im Rahmen der vorliegenden Erfindung könnten beispielsweise dem ersten der drei in dem Beispiel genannten Antriebe 5 kW zugeordnet werden, dem zweiten 7 kW und dem dritten 18 kW, zusammen also 30 kW. In jedem Fall kann die Produktivität der Maschine gesteigert werden. Weiterhin ist ein automatischer Ausgleich der verfügbaren Gesamtleistung P1 auf die ersten Antriebe 1a gewährleistet. Sowohl der Hersteller als auch der Betreiber der Maschine können Kosten einsparen.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Betriebsverfahren für eine Maschine, die mehrere erste Antriebe (1a) aufweist,
- wobei eine Steuereinrichtung (6) der Maschine einen Leistungsbezug (P1*), den die Maschine über eine zumindest die ersten Antriebe (1a) mit elektrischer Energie versorgende Einspeiseeinrichtung (2) bezieht, überwacht,
- wobei die Steuereinrichtung (6) die Maschine von einem Normalbetrieb in einen Sonderbetrieb umschaltet, sobald der Leistungsbezug (P1*) einen oberen Umschaltwert (GO) überschreitet, und die Maschine vom Sonderbetrieb in den Normalbetrieb umschaltet, sobald der Leistungsbezug (P1*) einen unteren Umschaltwert (GU) unterschreitet,
- wobei die Steuereinrichtung (6) sowohl im Normalbetrieb als auch im Sonderbetrieb zyklisch für die ersten Antriebe (1a) unter Verwendung eines für den jeweiligen Zyklus gültigen ersten Basissollwertes (B1j*) des jeweiligen ersten Antriebs (1a) jeweils einen vorläufigen ersten Stromsollwert (I1j*) ermittelt,
- wobei die Steuereinrichtung (6) sowohl im Normalbetrieb als auch im Sonderbetrieb die vorläufigen ersten Stromsollwerte (I1j*) derart ermittelt, dass ein Betriebszustand des jeweiligen ersten Antriebs (1a) dem jeweiligen ersten Basissollwert (B1j*) so weit wie möglich angenähert wird,
- wobei die Steuereinrichtung (6) die ersten Antriebe (1a) sowohl im Normalbetrieb als auch im Sonderbetrieb entsprechend einem jeweiligen resultierenden ersten Stromsollwert (I1j*, I1j*') ansteuert,
- wobei im Normalbetrieb die resultierenden ersten Stromsollwerte (I1j*') mit den jeweiligen vorläufigen ersten Stromsollwerten (I1j*) übereinstimmen,
- wobei die Steuereinrichtung (6) im Sonderbetrieb
-- eine für die ersten Antriebe (1a) in ihrer Gesamtheit verfügbare Gesamtleistung (P1) ermittelt,
-- unter Auswertung von aktuellen Soll- und/oder Ist-Betriebszuständen der ersten Antriebe (1a) für die ersten Antriebe (1a) dynamisch einen jeweiligen Anteilsfaktor (fj) ermittelt und
-- die resultierenden ersten Stromsollwerte (I1j*') durch Modifikation der vorläufigen ersten Stromsollwerte (I1j*) derart ermittelt, dass vom jeweiligen ersten Antrieb (1a) nur eine jeweilige Leistung bezogen wird, die sich als Produkt des jeweiligen Anteilsfaktors (fj) und der verfügbaren Gesamtleistung (P1) ergibt.

2. Betriebsverfahren nach Anspruch 1,
**dadurch gekennzeichnet,**
**dass** die Summe der Anteilsfaktoren (fj) stets den Wert 1 ergibt.

3. Betriebsverfahren nach Anspruch 1 oder 2,
**dadurch gekennzeichnet,**
- **dass** die Steuereinrichtung (6) sowohl im Normalbetrieb als auch im Sonderbetrieb zyklisch für eine Anzahl von über die Einspeiseeinrichtung (2) mit elektrischer Energie versorgten zweiten Antrieben (1b) unter Verwendung eines für den jeweiligen Zyklus gültigen zweiten Basissollwertes (B2i*) des jeweiligen zweiten Antriebs (1b) jeweils einen zweiten Stromsollwert (I2i*) ermittelt und den jeweiligen zweiten Antrieb (1b) entsprechend dem jeweiligen zweiten Stromsollwert (I2i*) ansteuert,
- **dass** die Steuereinrichtung (6) die zweiten Stromsollwerte (I2i*) sowohl im Normalbetrieb als auch im Sonderbetrieb derart ermittelt, dass ein Betriebszustand des jeweiligen zweiten Antriebs (1b) dem jeweiligen zweiten Basissollwert (B2i*) so weit wie möglich angenähert wird, und
- **dass** die Steuereinrichtung (6) die für die ersten Antriebe (1a) in ihrer Gesamtheit verfügbare Gesamtleistung (P1) anhand eines Leistungsgrenzwertes (PG) der Einspeiseeinrichtung (2) und einer zweiten Leistung (P2) ermittelt, welche von den zweiten Antrieben (1b) über die Einspeiseeinrichtung (2) aktuell bezogen wird.

4. Betriebsverfahren nach Anspruch 3,
**dadurch gekennzeichnet,**
**dass** die Steuereinrichtung (6) mindestens einen dritten Antrieb (1c) der Maschine in Abhängigkeit vom Betriebszustand der Maschine als ersten Antrieb (1a) oder als zweiten Antrieb (1b) behandelt.

5. Betriebsverfahren nach einem der obigen Ansprüche,
**dadurch gekennzeichnet,**
- **dass** die Steuereinrichtung (6) für die ersten Antriebe (1a) jeweils einen Antriebsregler (10) implementiert, dem der jeweilige erste Basissollwert (B1j*) und ein jeweils korrespondierender erster Basisistwert (B1j) zugeführt werden und mittels dessen die Steuereinrichtung (6) den jeweiligen vorläufigen ersten Stromsollwert (I1j*) ermittelt,
- **dass** die Antriebsregler (10) eine Regelcharakteristik mit einem Integralanteil aufweisen, insbesondere als PI-Regler realisiert sind, und
- **dass** die vorläufigen ersten Stromsollwerte (I1j*) in die Ermittlung der Anteilsfaktoren (fj) eingehen.

6. Betriebsverfahren nach einem der Ansprüche 1 bis 5,
**dadurch gekennzeichnet,**
**dass** die Steuereinrichtung (6) die Anteilsfaktoren (fj) derart ermittelt, dass der jeweilige Anteilsfaktor (fj) für den jeweiligen ersten Antrieb (1a) gleich dem Verhältnis eines von dem jeweiligen ersten Antrieb (1a) aufzubringenden Sollmoments (Mj*) zur Summe (M*) der von den ersten Antrieben (1a) insgesamt aufzubringenden Sollmomente (Mj*) ist.

7. Betriebsverfahren nach einem der Ansprüche 1 bis 5,
**dadurch gekennzeichnet,**
**dass** die Steuereinrichtung (6) die Anteilsfaktoren (fj) derart ermittelt, dass der jeweilige Anteilsfaktor (fj) für den jeweiligen ersten Antrieb (1a) gleich dem Verhältnis eines für den jeweiligen ersten Antrieb (1a) bestimmten Produkts (P1j*) zur Summe (P1*) von für die ersten Antriebe (1a) insgesamt bestimmten Produkten (P1j*) ist und dass das jeweilige Produkt (P1j*) durch ein von dem jeweiligen ersten Antrieb (1a) aufzubringendes Sollmoment (Mj*) und eine Drehzahl (nj*, nj) des jeweiligen ersten Antriebs (1a) bestimmt ist.

8. Betriebsverfahren nach Anspruch 7,
**dadurch gekennzeichnet,**
**dass** die Drehzahl (nj*, nj) des jeweiligen ersten Antriebs (1a) die Solldrehzahl (nj*) oder die Istdrehzahl (nj) des jeweiligen ersten Antriebs (1a) ist.

9. Betriebsverfahren nach Anspruch 7 oder 8,
**dadurch gekennzeichnet,**
**dass** die Steuereinrichtung (6) immer dann, wenn die jeweilige Drehzahl (nj*, nj) eines ersten Antriebs (1a) unterhalb einer jeweiligen Minimaldrehzahl (n0) oberhalb von 0 liegt, zur Ermittlung des jeweiligen Produkts (P1j*) die jeweilige Drehzahl (nj*, nj) durch die jeweilige Minimaldrehzahl (n0) ersetzt und/oder dass die Steuereinrichtung (6) immer dann, wenn das für einen jeweiligen ersten Antrieb (1a) ermittelte jeweilige Produkt (P1j*) unterhalb eines jeweiligen Minimalproduktwertes (P0) oberhalb von 0 liegt, im Rahmen der Ermittlung der Anteilsfaktoren (fj) das jeweilige Produkt (P1j*) durch den jeweiligen Minimalproduktwert (P0) ersetzt.

10. Betriebsverfahren nach einem der Ansprüche 1 bis 5,
**dadurch gekennzeichnet,**
**dass** die Steuereinrichtung (6) für die ersten Antriebe (1a) jeweils einen ersten Basisistwert (B1j) entgegennimmt, dass die Steuereinrichtung (6) für die ersten Antriebe (1a) jeweils eine Differenz (δj) des jeweiligen ersten Basisistwertes (B1j) vom jeweiligen ersten Basissollwert (B1j*) ermittelt und dass die Steuereinrichtung (6) die Anteilsfaktoren (fj) in Abhängigkeit von den ermittelten Differenzen (δj) ermittelt.

11. Steuerprogramm für eine Steuereinrichtung (6) für eine Maschine, die mehrere erste Antriebe (1a) aufweist, wobei das Steuerprogramm Maschinencode (8) aufweist, der von der Steuereinrichtung (6) abarbeitbar ist, wobei die Abarbeitung des Maschinencodes (8) durch die Steuereinrichtung (6) bewirkt, dass die Steuereinrichtung (6) die Maschine gemäß einem Betriebsverfahren nach einem der obigen Ansprüche betreibt.

12. Steuereinrichtung für eine Maschine, die mehrere erste Antrieb (1a) aufweist, wobei die Steuereinrichtung mit einem Steuerprogramm (7) nach Anspruch 11 programmiert ist, so dass die Steuereinrichtung die Maschine gemäß einem Betriebsverfahren nach einem der Ansprüche 1 bis 10 betreibt.

13. Maschine,
- wobei die Maschine mehrere erste Antriebe (1a) aufweist,
- wobei die Maschine eine Einspeiseeinrichtung (2) aufweist, über welche zumindest die ersten Antriebe (1a) mit elektrischer Energie versorgt werden,
- wobei die Maschine eine Steuereinrichtung (6) aufweist, welche die ersten Antriebe (1a) steuert,
**dadurch gekennzeichnet,**
**dass** die Steuereinrichtung (6) gemäß Anspruch 12 ausgebildet ist.
